# EUROPÄISCHE PATENTSCHRIFT

(11) **EP 0 493 740 B1**
(45) Veröffentlichungstag und Bekanntmachung des Hinweises auf die Patenterteilung: **18.10.1995**
(21) Anmeldenummer: 91121634.9
(22) Anmeldetag: 17.12.1991
(51) Int. Cl.: H04Q 1/14

(54) **Anschlussmodul für eine Verteilereinrichtung, insbesondere für den Hauptverteiler von Fernmeldeeinrichtungen**
Connection module for a distributing equipment, especially for the main distributing frame of telecommunication arrangements
Module de raccordement pour un dispositif de distribution, spécialement pour le principal répartiteur des arrangements de télécommunication

(30) Priorität: 31.12.1990 DE 4042240
(43) Veröffentlichungstag der Anmeldung: 08.07.1992
(73) Patentinhaber: QUANTE AG, 42109 Wuppertal (DE)
(72) Erfinder: Burmeister, Klaus-Dieter, W-5600 Wuppertal 1 (DE); Otto, Hans-Dieter, W-5272 Wipperfürth (DE); Rott, Joachim, W-1000 Berlin 37 (DE)
(74) Vertreter: Füchsle, Klaus, Dipl.-Ing.

(56) Entgegenhaltungen:
- EP-A- 0 364 658
- DE-A- 3 308 682
- DE-A- 3 411 711
- DE-A- 3 614 063

## Beschreibung

Die Erfindung betrifft ein Anschlußmodul für eine Verteilereinrichtung, insbesondere für den Hauptverteiler von Fernmeldeeinrichtungen, an dessen Anschlußseite eine Teilnehmer- und eine Vermittlungsleitung gelegt ist und an dessen Manipulierseite Rangierleitungen anbringbar sind, wobei das Anschlußmodul wenigstens auf der Anschlußseite mit Einstecköffnungen zum Einstecken von Schaltsteckern versehen ist, und im Innern wenigstens eine zwischen den Kontaktelementen angeordnete, die Leitungswege durchschaltende Trennstelle aufweist.

Derartige Anschlußmodule finden in Hauptverteilern Anwendung, die einerseits zum Anschließen der von außen in eine Vermittlungsstelle hineinführenden Teilnehmerleitungen und andererseits zum Anschließen der weiter zu den technischen Einrichtungen der Vermittlungsstelle führenden Vermittlungsleitungen ausgelegt sind. Beide Leitungssorten werden grundsätzlich räumlich voneinander getrennt an den Verteiler gelegt. Die Verbindung erfolgt mit Schaltdraht, der somit die Rangierung jeder beliebigen Teilnehmerleitung mit jeder beliebigen Vermittlungsleitung ermöglicht. Die auf diese Weise verschalteten Geräte müssen für Test- und Prüfzwecke zugänglich sein, ferner ist es häufig erforderlich, die angeschlossenen Vermittlungseinrichtungen an diesen Geräten gegen Überspannungen bzw. gegen Überströme zu sichern. Dazu sind für die verschalteten Geräte Anschlußvorrichtungen mit mindestens einem Ruhekontakt vorgesehen, der für die Einschaltung von Meßleitungen, Stromsicherungen, Dämpfungsgliedern oder Überspannungs- bzw. Überstromschutzeinrichtungen verwendbar ist. Falls erforderlich, kann ein zusätzlicher Abgreifkontakt oder ein zweiter Ruhekontakt vorgesehen sein.

Für einen derartigen Verteiler wird viel Raum benötigt, da die beiden separaten Anschlußvorrichtungen so an einem Gestell befestigt werden müssen, daß die beliebige Rangierung mittels Schaltdraht möglich ist. Bei großen Verteilern entstehen dabei so umfangreiche Schaltdrahtpakete, daß ein Entfernen nicht mehr benötigter Schaltdrahtverbindungen häufig nur mit großen Aufwand möglich wäre und daher oftmals unterlassen wird. Dadurch füllt sich der Verteiler im Laufe der Zeit mit Schaltdraht, was dazu führen kann, daß das Anbringen neuer Rangierleitungen nur unter großen Schwierigkeiten durchzuführen ist. Prinzipiell allerdings kann nicht nur jede beliebige Teilnehmerleitung mit jeder beliebigen Vermittlungsleitung verbunden werden, man kann darüber hinaus Verbindungen ändern, ohne die alte Verbindung vorher trennen zu müssen. Zudem liegt in jedem Leitungszug mindestens ein für Meßzwecke völlig frei zugänglicher Ruhekontakt vor, und zwar auch dann, wenn beispielsweise der Ruhekontakt in einer der beiden Anschlußvorrichtungen bereits belegt ist.

Der Nachteil des hohen Raumbedarfs fällt umso schwerer ins Gewicht, da die Vermittlungseinrichtungen durch fortschreitende Miniaturisierung mittels mikroelektronischer Bauteile immer weniger Raum benötigen, was nicht ausgenutzt werden kann, da der Hauptverteiler in der Größe nahezu unverändert geblieben ist.

Eine kompaktere Bauweise wird möglich, wenn Anschlußmoduln für die Verschaltung verwendet werden. Ein Anschlußmodul der eingangs genannten Gattung ist aus der DE-A 36 14 063 bekannt. Für jede Paarung von Teilnehmerleitung und Vermittlungskabel wird bei der Rangierung nur ein einziges Anschlußmodul benötigt. Bei einer später notwendig werdenden Änderung der Zuordnung einer Teilnehmerleitung zu einer anderen Vermittlungsleitung, also für eine Sonderrangierung, wird ein besonderer Schaltstecker von der Manipulierseite her in das Anschlußmodul geschoben. Dieser Anschlußstecker bricht eine im Innern des Anschlußmoduls befindliche Trennstelle auf, so daß unterbrechungsfrei die neue Verbindung mit Hilfe eines bereits vorab bestückten Schalteckers vorgenommen werden kann. Bezüglich der Übersichtlichkeit der Verteilereinrichtung ist damit ein großer Fortschritt erzielt, jedoch wäre es wünschenswert, den Raumbedarf weiter zu verringern.

Es ist daher die Aufgabe der Erfindung, ein Anschlußmodul so zu verbessern, daß sich ein wesentlich verringerter Raumbedarf des Hauptverteilers ergibt, ohne jedoch auf gute Zugänglichkeit auf Ruhekontakte und vorhandene Trennstellen, verzichten zu müssen. Dabei sollen keine zusätzlichen Kontaktstellen gegenüber bekannten Schaltungsvorgängen erzeugt werden, um das Auftreten möglicher Fehlerquellen gering zu halten.

Diese Aufgabe wird von einem Anschlußmodul der eingangs genannten Gattung mit den Merkmalen des Kennzueichnes von Patentanspruch 1 gelöst. Vorteilhafte Ausgestaltungen sind Gegenstand der Unteransprüche.

Erfindungsgemäß sind in dem Anschlußmodul zwei Ruhekontakte untergebracht, weiterhin ist für eine Normalrangierung eine reversibel verlagerbare Rangiervorrichtung vorgesehen. Die herkömmlich in den zwei getrennten Anschlußvorrichtungen angeordneten Ruhekontakte werden gemäß der vorliegenden Erfindung nunmehr integrierter Bestandteil eines Anschlußmoduls und sind in diesem leicht zugänglich, indem nämlich geeignete Einstecköffnungen am Anschlußmodul angebracht werden. Die reversibel verlegbare Rangiervorrichtung ersetzt die herkömmliche Verbindung durch Schaltdraht, so daß die Normalrangierung völlig ohne diesen durchgeführt wird. Dadurch werden von vornherein Drahtpakete vermieden, die sich durch die notwendige Rangierung üblicherweise ergeben. Die Rangiervorrichtung gemäß der vorliegenden Erfindung wird einfach entfernt, wenn sie nicht mehr benötigt wird, so daß kein Drahtballast im Verteiler verbleibt. Gleichzeitig wird durch diese Rangiervorrichtung eine gegebenenfalls notwendige Rangierung leicht erkennbar, wodurch die Übersichtlichkeit innerhalb des Verteilers weiter zunimmt. Da zwei Ruhekontakte für jedes Paar Teilnehmer- und Vermittlungsleitungen vorgesehen sind, können Schutzeinrichtungen für jede einzelne Leitung separat angebracht werden, so daß der Schutz nur an tatsächlich in Betrieb befindlichen Leitungen angeschlossen werden kann und nicht die heute häufig verwendete Überspannungsableiter Magazine für fünf, acht oder zehn Doppeladern eingesetzt werden müssen.

Vorteilhafte Ausgestaltungen des erfindungsgemäßen Anschlußmoduls beinhalten einen Rangierstecker, der für Sonderrangierung vorgesehen ist. Bei geeigneter Ausgestaltung des Rangiersteckers kann die erforderliche Bestückung für die Sonderrangierung vorab vorgenommen werden, so daß mit dem Einschieben des Rangiersteckers die erforderlichen neuen Verbindungen bereits vorliegen.

So kann beispielsweise der Rangierstecker für die Teilnehmerleitung und für die Vermittlungsleitung je einen Rangieranschluß aufweisen. Auch kann es vorteilhaft sein, in dem Rangierstecker wenigstens eine Trennstelle unterzubringen.

Bei einigen Ausführungsformen der vorliegenden Erfindung ist ein Rangierstecker, insbesondere ein solcher mit relativ aufwendiger Leitungsstruktur, entbehrlich.

Beispielsweise kann die Normalrangierung mittels eines auf der Manipulierseite aufgebrachten entfernbaren Steckverbinders als Rangiervorrichtung vorgenommen sein.

Dabei ist es zweckmäßig, wenn auf der Manipulierseite für das Teilnehmerkabel und für das Vermittlungskabel jeweils ein Rangieranschluß für die Sonderrangierung vorgesehen ist. Wenn dann die gewünschte geänderte Rangierverbindung an den jeweiligen Anschlußmoduln hergestellt ist, wird der Steckverbinder einfach gezogen, so daß der Übergang zur neuen Verschaltung unterbrechungsfrei erfolgt.

Eine wie eben beschriebene Anordnung der Rangieranschlüsse ist auch zweckmäßig, wenn die Normalrangierung mittels einer öffenbaren Kontaktstelle als Rangiervorrichtung vorgenommen ist. Nachdem alle erforderlichen Verbindungen dür die neue Beschaltung vorliegen, muß lediglich die Kontaktstelle geöffnet werden, wozu einfacher, an sich bekannter Trennstecker benutzt werden kann. Dieser entspricht somit in seiner Funktion einem Rangierstecker, hat jedoch nicht dessen Leitungsstruktur.

Eine weitere vorteilhafte Ausgestaltung der Erfindung besteht darin, die Normalrangierung mittels einer verschiebbaren Brücke als Rangiervorrichtung vorzunehmen, wobei dann die Brückenarme jeweils einen Kontaktarm jeweils eines Ruhekontaktes bilden.

Dabei ist vorteilhaft eine Feder vorgesehen, auf welcher die Brücke so aufliegt, daß die Brückenarme bei Normalrangierung in Kontakt mit dem Kontaktarm des jeweiligen Ruhekontaktes sind.

Für diese Ausführungsform ist wiederum ein Rangierstecker erforderlich, der, wenn er in das Anschlußmodul eingeschoben ist, die Brücke aus ihrer Stellung der Normalrangierung zwingt, wobei an dem Rangierstecker angebrachte Kontaktarme, die mit den Rangieranschlüssen verbunden sind, in Kontakt mit jeweils einem Kontaktarm des jeweiligen Ruhekontaktes sind. Die Ruhekontakte ändern bei dieser Ausführungsform der Erfindung also ihre Lage nicht, obwohl bei der Normalrangierung und bei der Sonderrangierung Kontaktarme von unterschiedlichen Bauteilen her an der Bildung des Ruhekontaktes beteiligt sind. Um die mechanische Stabilität der Anordnung zu gewährleisten, kann der Rangierstecker einen Schaft aufweisen, der in der eingeschobenen Stellung die Brücke entgegen der Rückstellkraft der Feder hält.

Außerdem können Stützen vorgesehen sein, an denen die Kontaktarme des eingeschobenen Rangiersteckers anliegen.

Zudem hat es sich als vorteilhaft herausgestellt, den Rangierstecker in einer Führung zu lagern.

Besonders bevorzugt ist eine Ausführungsform, bei der die Brückenarme eingewinkelt sind und einer der Schenkel jedes eingewinkelten Brückenarmes entlang der entsprechend angeschrägten Stirnflächen jeder Stützen bewegbar ist, wobei bei eingeschobenem Rangierstecker die Scheitelstelle jedes eingewinkelten Brückenarmes an den Schaft zu liegen kommt. Bei genauer Wahl der Abmessungen von Brücken und Schaft wird so erreicht, daß die Normalrangierung durch Ziehen des Rangiersteckers ohne weiteres wieder hergestellt werden kann, da die Brücke bei der Sonderrangierung unverrückbar zwischen Feder, Schaft und Stützen gehalten wird.

Das erfindungsgemäße Anschlußmodul erlaubt eine variable Grundanordnung von Teilnehmerleitungen, Vermittlungsleitungen und Rangierleitungen. So können beispielsweise die Anschlußseite mit den Teilnehmer- und Vermittlungsleitungen und die Manipulierseite mit den Rangierleitungen auf derselben Zugangsseite des Anschlußmoduls vorgesehen sein.

Es ist aber auch möglich, die Anschlußseite in Teilnehmerseite und Vermittlungsseite aufzuteilen, wobei die Teilnehmerseite und die Manipulierseite dann auf derselben Zugangsseite des Anschlußmoduls vorgesehen sind. Die ermöglicht alle Handhabungsvorgänge nur von einer Zugangsseite aus.

Mit den Anschlußmoduln in ihren verschiedenen Ausgestaltungen können Trenn-Schaltleisten aufgebaut werden, bei denen die Anschlußmoduln an einer gemeinsamen Erdschiene liegen. Die Trenn-Schaltleisten können wiederum in Stapeltechnik zu einem sehr kompakten Hauptverteiler zusammengefaßt werden.

Im folgenden soll die Erfindung lediglich beispielhaft anhand der Zeichnungen mit weiteren Einzelheiten näher erläutert werden. Es zeigt:
- Fig. 1: eine erste Ausführungsform eines erfindungsgemäßen Anschlußmoduls mit Steckverbinder für die Normalrangierung,
- Fig. 2: eine zweite Ausführungsform des erfindungsgemäßen Anschlußmoduls mit einer durch einen Trennstecker öffenbaren Kontaktstelle,
- Fig. 3: eine dritte Ausführungsform des erfindungsgemäßen Anschlußmoduls. wobei ein Rangierstecker vorgesehen ist,
- Fig. 4: eine vierte Ausführungsform eines Anschlußmoduls, bei der die Normalrangierung durch eine Brücke hergestellt ist,
- Fig. 5: den Aufbau einer Kreuzrangierung mit zwei Anschlußmoduln nach Fig. 4 und Rangiersteckern,
- Fig. 6: eine fünfte Ausführungsform eines Anschlußmoduls, bei der die Normalrangierung wiederum über eine Brücke hergestellt ist, wobei jedoch Manipulierseite und Anschlußseite auf derselben Fläche des Anschlußmoduls vorgesehen sind,
- Fig. 7: eine Kreuzrangierung unter Verwendung der Anschlußmoduln aus Fig. 5 mit entsprechend gestalteten Rangiersteckern,
- Fig. 8: eine sechste Ausführungsform eines Anschlußmoduls, mit Steckverbinder und vollständiger Bedienbarkeit von nur einer Seite aus,
- Fig. 9: den Aufbau von Trenn-Schaltleisten aus Moduln nach Fig. 8, wobei beispielhaft eine Kreuzrangierung dargestellt ist,
- Fig. 10: eine siebte Ausführungsform eines Anschlußmoduls, bei dem Manipulierseite und Teilnehmerseite zusammen auf einer Fläche des Anschlußmoduls liegen, während die Vermittlungsseite auf der gegenüberliegenden Fläche in Form eines Kabelsteckers angebracht ist,
- Fig. 11: den schematischen Aufbau eines Hauptverteilers mit Anschlußmoduln nach Fig. 10, und
- Fig. 12: eine schematische Teilansicht eines Hauptverteilers mit zwei Stapeln aus Trenn-Schaltleisten mit Anschlußmoduln nach Ausführungsformen der Erfindung, bei welchem die Bedienungsvorgänge alle nur von der frei zugänglichen Frontseite her erfolgen.

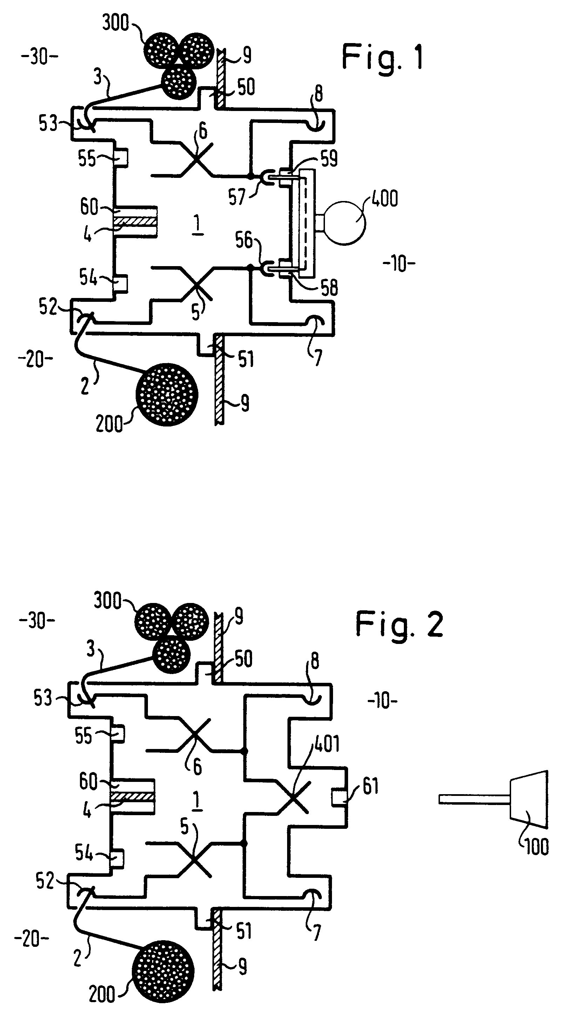

Fig. 1 zeigt ein Anschlußmodul 1, das in eine Öffnung eines Gestells 9 eingesetzt ist, wobei am Anschlußmodul 1 Anschlagleisten 50, 51 vorgesehen sind, über die die Befestigung am Gestell 9 erfolgt. Auf der Teilnehmerseite 20 werden unterhalb des Anschlußmoduls 1 die zu einem Kabelstrang 200 zusammengefaßten Teilnehmerleitungen zugeführt, wobei an jedem der Anschlußmoduln 1 für eine Teilnehmerleitung 2 ein Anschlußkontakt 52 vorgesehen ist. Entsprechend werden auf der Vermittlungsseite 30 Vermittlungsleitungen in einem Kabelstrang 300 oberhalb des Anschlußmoduls 1 zugeführt, wobei eine der Vermittlungsleitungen 3 einem Anschlußkontakt 53 zugeführt wird. Die beiden Anschlußkontakte 52, 53 münden jeweils in einem Ruhekontakte 5, 6 im Innern des Anschlußmoduls 1. Auf der Anschlußseite 20, 30 sind zwei Einstecköffnungen 54, 55 in der Nähe der Anschlußkontakte 52, 53 vorgesehen, durch die direkt auf die Ruhekontakte 5, 6 zugegriffen werden kann. Die Ruhekontakte 5, 6 sind also unabhängig von der gewählten Beschaltung zugänglich. Auf der Manipulierseite 10 sind, einander diametral gegenüberliegend, zwei Rangieranschlüsse 7, 8 angebracht, die mit dem jeweiligen Ruhekontakt 5, 6 verbunden sind. Gleichfalls mit den Ruhekontakten 5, 6 verbunden sind zwei Rangierkontakte 56, 57, die von der Manipulierseite 10 her über Einstecköffnungen 58, 59 zugänglich sind. Für die Normalrangierung werden die Rangierkontakte 56, 57 mit Hilfe eines Steckverbinders 400, in dem eine entsprechende Leiterbahn angebracht ist, verbunden. Ist eine Sonderrangierung erforderlich, so werden die entsprechenden Rangierleitungen an die Rangieranschlüsse 7, 8 gelegt, und der Steckverbinder 400 wird anschließend gezogen. Somit wird ein unterbrechungsfreies Umrangieren erreicht. Das Anschlußmodul nach Fig. 1 enthält sechs Kontaktstellen, nämlich an den Anschlußkontakten 52, 53, an den Rangierkontakten 56, 57 und an den Ruhekontakten 5, 6. Dieses entspricht der Anzahl, wie sie auch nach einer konventionellen Schaltung mit Anschlußvorrichtungen und Schaltdraht vorliegen würde. Die auf der Anzahl der Kontaktstellen beruhende Störanfälligkeit wird daher nicht vergrößert. Die funktionsgerechte Bedienung des Anschlußmoduls erfordert eine Zugänglichkeit sowohl von der Anschlußseite als auch von der Manipulierseite her. Mehrere derartige Anschlußmoduln können in einer Reihe angeordnet werden, ohne das die Zugänglichkeit in irgendeiner Weise beeinträchtigt würde. Damit ist es möglich, für alle Anschlußmoduln eine gemeinsame Erdschiene 4 vorzusehen, die jeweils in einer Aussparung 60 im Anschlußmodul untergebracht ist.

Fig. 2 zeigt eine Ausführungsform eines erfindungsgemäßen Anschlußmoduls 1, dessen Aufbau und Beschaltung auf der Anschlußseite 20, 30 vollständig dem des Moduls aus Fig. 1 entspricht. Die Normalrangierung wird hier jedoch über eine öffenbare Kontaktstelle 401 hergestellt, die sowohl mit dem Ruhekontakt 5 als auch mit dem Ruhekontakt 6 elektrisch leitend verbunden ist. Gleichfalls an den Ruhekontakten 5, 6 liegen wiederum Rangieranschlüsse 7, 8, an die, wenn erforderlich, die Rangierleitungen für die gewünschte Sonderrangierung gelegt werden können. Sobald die Verteilereinrichtung nach der Sonderrangierung beschaltet werden soll, wird die Kontaktstelle 401 mittels eines Trennsteckers 100 geöffnet, der durch eine Einstecköffnung 61, welche der Kontaktstelle 401 gegenüberliegt, von der Manipulierseite 10 her gesteckt wird. Der Trennstecker 100 besteht dabei im wesentlichen aus einem Stift aus isolierendem Material, der zwischen die Kontaktarme der Kontaktstelle 401 geführt wird. Bei der Normalrangierung liegen fünf Kontaktstellen vor, also eine Kontaktstelle weniger als bei der konventionellen Beschaltung, wie im Zusammenhang mit Fig. 1 erläutert. Bei der Sonderrangierung wird mit sechs Kontaktstellen gearbeitet.

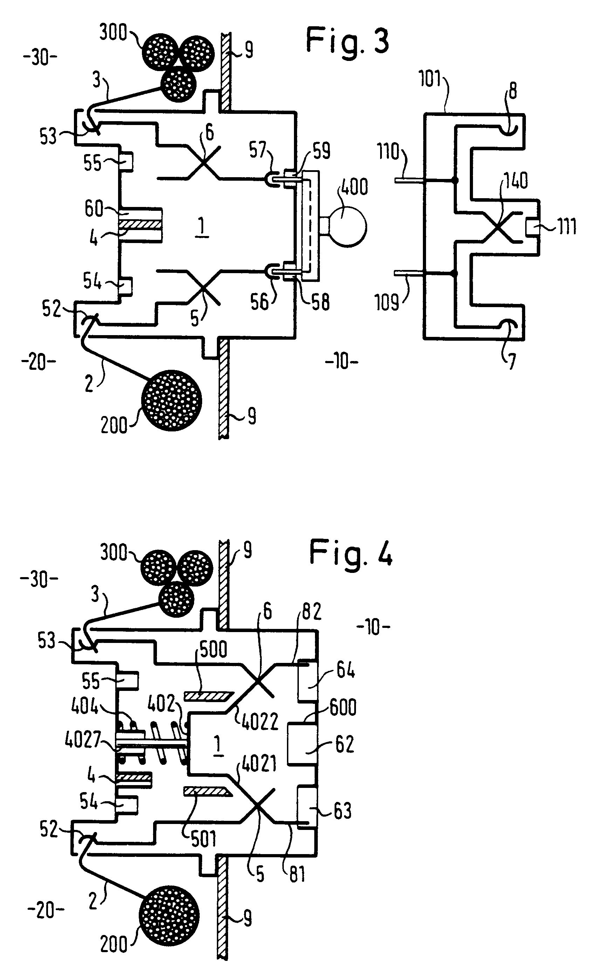

Auch die Ausführungsform des Anschlußmoduls 1 aus Fig. 3 entspricht auf seiner Anschlußseite 20, 30 dem des Moduls aus Fig. 1. Die Ruhekontakte 5, 6 sind mit Rangierkontakten 56, 57 auf der Manipulierseite 10 verbunden. Für die Normalrangierung werden die Rangierkontakte 56, 57 über einen Steckverbinder 400 verbunden, der durch entsprechend vorgesehene Einstecköffnungen 58, 59 eingreift. Zum Aufbau einer Sonderrangierung ist ein Rangierstecker 101 vorgesehen, der zwei einander diametral gegenüberliegende Rangieranschlüsse 7, 8 aufweist, die innerhalb des Rangiersteckers 101 über eine Trennstelle 140 verbunden sind. Aus dem Rangierstecker 101 sind Anschlußstifte 109, 110 herausgeführt, welche auf beiden Seiten der Trennstelle 140 jeweils mit einem der Rangieranschlüsse 7, 8 verbunden sind. Die Anschlußstifte 109, 110 sind in ihrem gegenseitigen Abstand so ausgelegt, daß dieser dem Abstand der Einstecköffnungen 58, 59 auf der Manipulierseite 10 des Anschlußmoduls 1 entspricht. Soll nun eine Sonderrangierung vorgenommen werden, so werden die notwendigen Rangierleitungen an die Rangieranschlüsse 7, 8 angeschlossen, worauf der Rangierstecker 101 anstelle des Steckverbinders 400 in die Einstecköffnungen 58, 59 des Anschlußmoduls 1 eingesetzt wird. Zur Beschaltung gemäß der Sonderrangierung wird ein geeigneter Trennstecker, beispielsweise ein solcher wie nach der Ausführungsform nach Fig. 2, in die der Trennstelle 140 gegenüberliegende Einstecköffnung 111 eingeführt. Auch wenn keine Sonderrangierung vorgenommen werden soll, kann der Rangierstecker 101 verwendet werden, um mit der Trennstelle 140 eine Möglichkeit zu schaffen, Prüf- oder Meßgeräte einzuschalten. Bei dieser Ausführungsform der Erfindung wird bei Normalrangierung mit sechs, bei Sonderrangierung mit sieben Kontaktstellen gearbeitet. Falls das Anschlußmodul 1 mit dem Steckverbinder 400 in Betrieb genommen worden ist, ist eine Unterbrechung erforderlich, um den Rangierstecker 101 aufzusetzen. Es ist auch hier erforderlich, daß das Anschlußmodul sowohl von der Anschlußseite 20, 30 als auch von der Manipulierseite 10 her zugänglich ist, um einerseits auf die Ruhekontakte 5, 6 zugreifen zu können, andererseits den Rangierstecker 101 aufzustecken bzw. die Trennstelle 140 zu nutzen.

Das in Fig. 4 dargestellte Anschlußmodul 1 ist wie bei den vorangehend beschriebenen Ausführungsformen in einem Gestell 9 untergebracht. Eine Teilnehmerleitung 2 aus einem Kabelstrang 200 ist unterhalb des Anschlußmoduls 1 herangeführt und an einen Anschlußkontakt 52 angeschlossen. Entsprechend ist eine Vermittlungsleitung 3 auf einem Kabelstrang 300 oberhalb des Anschlußmoduls 1 zu einem Anschlußkontakt 53 geführt. Die beiden Anschlußkontakte 52, 53 liegen einander gegenüber auf der Anschlußseite 20, 30 des Anschlußmoduls 1. Die Anschlußkontakte 52, 53 führen zu Ruhekontakten 5, 6, die im Innern des Anschlußmoduls 1 auf dessen Manipulierseite 10 angeordnet sind. In ihrer Verlängerung bilden sie somit einen der Kontaktarme 81, 82 des jeweiligen Ruhekontaktes 5, 6. Auf der Anschlußseite sind Einstecköffnungen 54, 55 den Ruhekontakten 5, 6 jeweils gegenüberliegend vorgesehen, durch welche diese frei zugänglich sind. Der jeweils ander Kontaktarm wird von den Brückenarmen 4021, 4022 einer im Anschlußmodul 1 untergebrachten Brücke 402 gebildet. Die Brücke 402 ruht auf einer Feder 404, die koaxial zur Mittelachse des Anschlußmoduls 1 angeordnet ist. An der Grundseite der Brücke 402 ist ein Stift 4027 angebracht, der in einer Führung läuft und für eine stabile Lage der Brücke 402 während einer eventuellen Bewegung gegen die Kraft der Feder 404 sorgt. Auf beiden Seiten der Brücke 402 ist eine Stütze 500, 501 vorgesehen, deren Funktionsweise weiter unten erläutert wird. In dieser Stellung der Brücke 402 ist die Normalrangierung für das Anschlußmodul 1 gebildet. Von der Manipulierseite 10 her ist das Modul durch die Einstecköffnungen 62, 63 und 64 zugänglich. Die Einstecköffnung 62 ist von einer Führung 600 umgeben und liegt koaxial zur Mittelachse des Anschlußmoduls 1 bzw. zur Feder 404. Auf der Anschlußseite 20, 30 ist unterhalb der Feder 404 die Möglichkeit vorgesehen, eine Erdschiene 4 anzubringen.

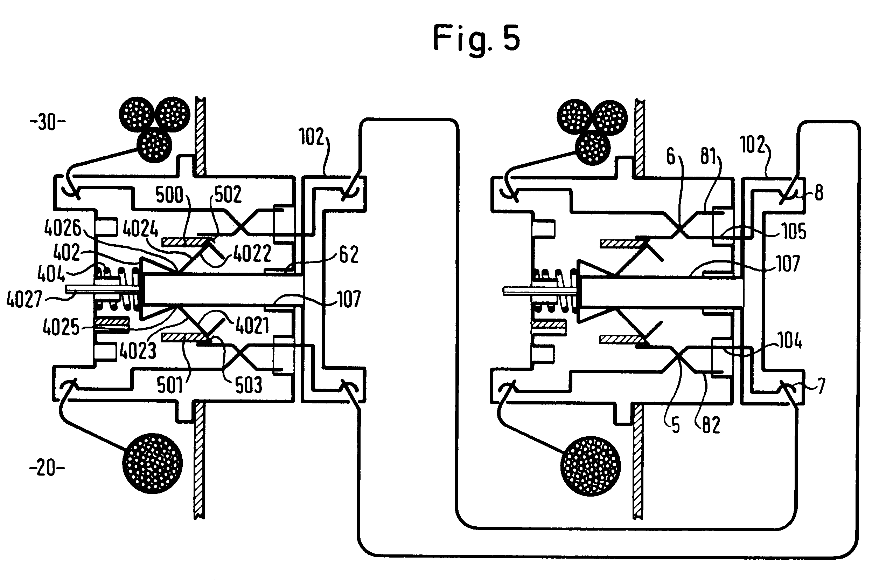

Fig. 5 zeigt zwei identisch aufgebaute Anschlußmoduln in der Ausführungsform nach Fig. 4, die durch eine Kreuzrangierung zusammengeschaltet sind. Zum Ausbilden der Rangierung wird in jedes Anschlußmodul ein entsprechend bestückter Rangierstecker 102 durch die Einstecköffnung 62 eingeführt. Der Schaft 107 des eingeschobenen Rangiersteckers 102 zwingt die Brücke 402 gegen die Rückstellkraft der Feder 404 in Richtung auf die Anschlußseite 20, 30 des jeweiligen Anschlußmoduls, wobei sie durch den in eine Führung gelegten Stift 4027 stabilisiert wird. Dabei gleiten die eingewinkelt ausgebildeten Brückenarme 4021, 4022 mit dem oberen Schenkel 4023, 4024 entlang der jeweils entsprechend angeschrägten Stirnfläche 502, 503 jeder der Stützen 500, 501. Wenn der Rangierstecker 102 vollständig eingeschoben ist, befinden sich der Schenkel 4024, 4023 jedes Brückenarmes 4021, 4022 auf der Stütze 500, 501 und ist so aus der Funktion des Ruhekontaktes 5, 6 ausgeschieden und durch die Kontaktarme 104, 105 des Rangierstecker ersetzt worden. Die Rangieranschlüsse 7, 8 sind zu Kontaktarmen 104, 105 verlängert, die beiderseitig des Schaftes 107 aus dem Rangierstecker 102 hinausgeführt sind. Diese Kontaktarme 104, 105 sind so bemessen, daß sie bei vollständig eingeschobenem Rangierstecker 102 zusammen mit den Kontaktarmen 81, 82 die Ruhekontakte 5, 6 bilden. Gegenüber der Normalrangierung haben die Ruhekontakte 5, 6 bei der Sonderrangierung ihre Lage innerhalb des Anschlußmoduls nicht verändert, diese sind nach wie vor durch die entsprechenden Einstecköffnungen frei zugänglich. Der Führungsstift 4027 tritt bei gestecktem Rangierstecker aus der Anschlußseite des Moduls hervor und zeigt an, daß eine Sonderrangierung vorliegt. Bei der hier dargestellten Kreuzrangierung ist der obere Rangieranschluß des ersten Anschlußmoduls mit dem unteren Rangieranschluß des zweiten Moduls bzw. der untere Rangieranschluß des ersten mit dem oberen Rangieranschluß des zweiten Moduls verbunden.

An dem Ausführungsbeispiel der Erfindung nach den Fig. 4 und 5 wird die gewünschte Reduzierung der im Anschlußmodul vorhandenen Kontaktstellen gegenüber der konventionellen Lösung deutlich. Bei der Normalrangierung sind nur vier Kontaktstellen im Leitungszug vorhanden, bei der Sonderrangierung liegen in jedem Leitungszug sechs Kontaktstellen vor. Auch hier ist die Zugänglichkeit des Moduls sowohl von der Anschlußseite als auch von der Manipulierseite her gegeben, um alle möglichen Funktionen voll ausnützen zu können.

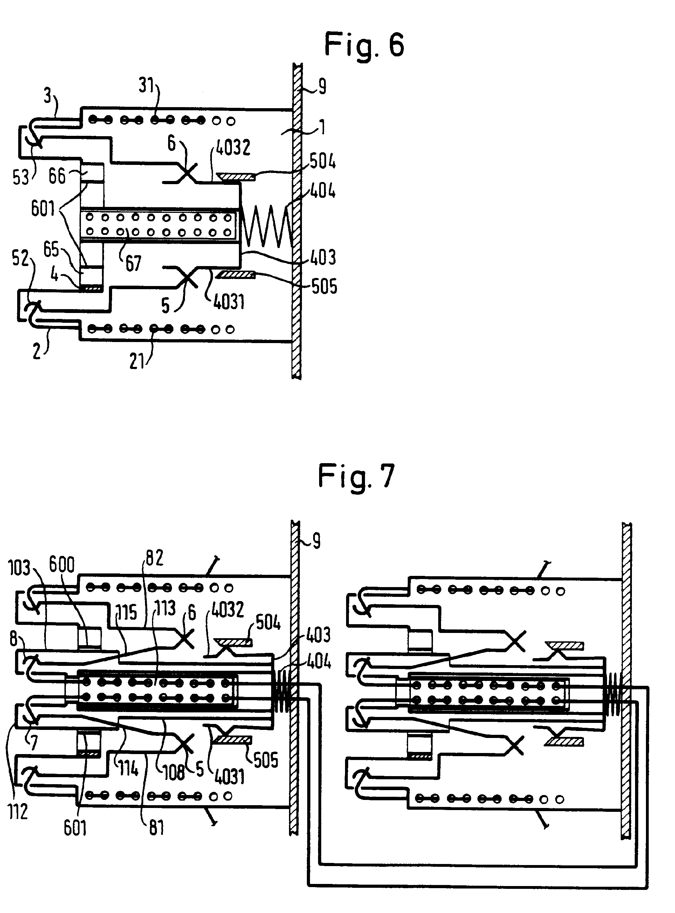

Fig. 6 zeigt eine Ausführungsform der Erfindung, bei der das Anschlußmodul 1 nunmehr nur von einer Seite her zugänglich sein muß. Je eine Teilnehmerleitung 2 und eine Vermittlungsleitung 3 werden über eine Lochführung 21, 31 Anschlußkontakten 52, 53 zugeführt. Die Anschlußkontakte 52, 53 sind zu einem feststehenden Kontaktarm des jeweiligen Ruhkontaktes 5, 6 verlängert. Der jeweils andere Kontaktarm wird von den Armen 4031, 4032 einer Brücke 403 gebildet, die auf einer Feder 404 aufliegt. Durch zwei Stützen 504, 505 wird die Brücke 403 bei einer Bewegung stabilisiert und im Rangierzustand abgehoben. Die Ruhekontakte 5, 6 sind durch Einstecköffnungen 65, 66 auf der gemeinsamen Anschluß- und Manipulierseite zugänglich. Eine Führungsleiste 67 ist koaxial zur Mittelachse des Anschlußmoduls 1 angeordnet, sie ist ebenfalls von der gemeinsamen Anschluß- und Manipulierseite her zugänglich. Eine Führung 601 umgibt ebenfalls koaxial die Mittelachse des Anschlußmoduls 1. Im Bereich der Einstecköffnung 65 ist eine Erdschiene 4 vorgesehen.

Fig. 7 zeigt zwei identisch aufgebaute Anschlußmoduln nach Fig. 6, die über Kreuzrangierung miteinander verschaltet sind. Der verwendete Rangierstecker 103 besteht aus einem Hohlschaft 108, in dem eine Führungsleiste 113 für die Rangierleitungen untergebracht ist, sowie einem Kopf 112, in dem Rangieranschlüsse 7, 8 vorgesehen sind. Der Kopf ist im Querschnitt ringförmig, wobei die Verbindungsleitungen aus der Führungsleiste 113 von der Innenseite her den Rangieranschlüssen 7, 8 zugeleitet sind.

Die Rangieranschlüsse 7, 8 verlängern sich zu Kontaktarmen 114, 115, die an der Unterseite des Kopfes 112 aus dem Rangierstecker 103 hinausgeführt sind. Sie sind so ausgelegt, daß sie bei eingeschobenen Rangierstecker 103 an die feststehenden Kontaktarme 81, 82 zu liegen kommen und mit diesen wiederum die Ruhekontakte 5, 6 bilden. Während des Einschiebens des Rangiersteckers 103, der durch die Führung 601 geführt wird, wird die Brücke 403 gegen die Rückstellkraft der Feder 404 in Richtung auf das Gestell 9 gezwungen. Dabei lösen sich deren Kontaktarme 4031, 4032 von den Ruhekontakten 5, 6 und gleiten auf die Stützen 505, 504. Beim Entfernen des Rangiersteckers würde die Brücke 403 wieder in ihre ursprüngliche Stellung für die Normalrangierung zurückkehren.

Die Verbindung der Moduln untereinander entspricht der nach Fig. 5. Auch die Anzahl der Kontaktstellen mit vier für die Normalrangierung und sechs für einen Leistungszug bei der Sonderrangierung stimmt mit dieser überein.

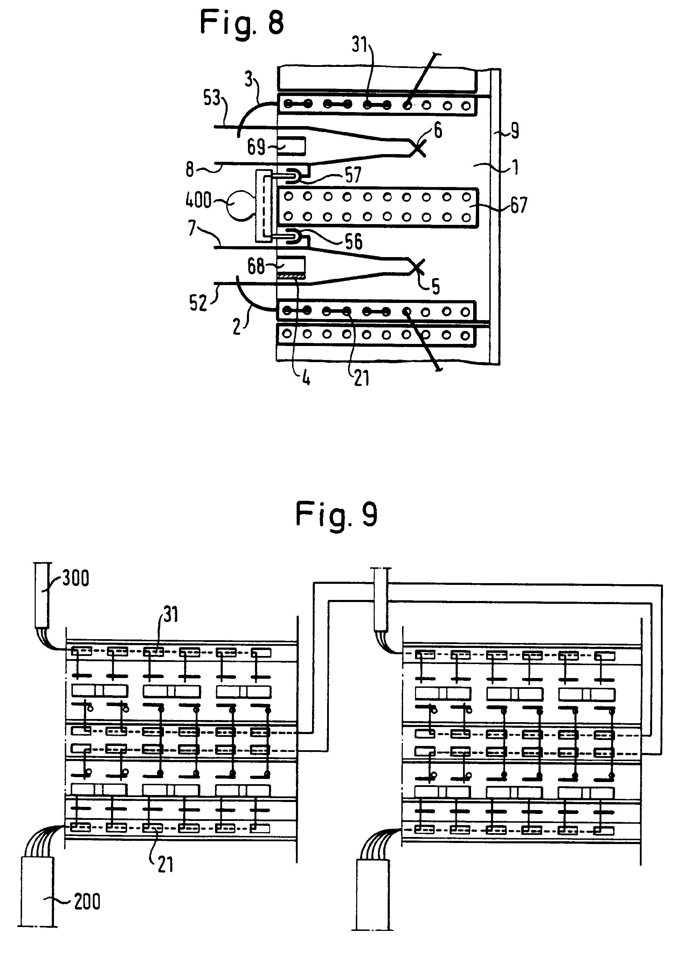

Das Anschlußmodul nach Fig. 8 ist auf dem Gestell 9 befestigt, wobei es ebenfalls ausreichend ist, wenn es von seiner gemeinsamen Anschluß- und Manipulierseite her zugänglich ist. Je eine Teilnehmerleitung 2 und eine Vermittlungsleitung 3 sind in entsprechenden Kontakten 52, 53 an der Unter- und Oberseite des Anschlußmoduls 1 über jeweils eine Lochführung 21, 31 zugeführt. Sie münden jeweils in einen der Kontaktarme des jeweiligen Ruhekontaktes 5, 6. Der andere Kontaktarm der Ruhekontakte 5, 6 führt zu den Rangieranschlüssen 7, 8. Zwischen jeweils einem Anschlußkontakt 52, 53 und dem entsprechenden Rangieranschluß 7, 8 befindet sich eine Einstecköffnung 68, 69, über die die Ruhekontakte 5, 6 frei zugänglich sind. Unterhalb der Einstecköffnung 68 ist die Erdschiene 4 vorgesehen. Zentral im Anschlußmodul 1 ist eine Führungsschiene 67 angebracht. Bei der Normalrangierung ist ein Steckverbinder 400 über Rangierkontakte 56, 57 gelegt: insoweit entspricht diese Ausführungsform der nach Fig. 1. Der Steckverbinder 400 liegt gleichzeitig über der Führungsleiste 67. Wenn die für die Sonderrangierung erforderlichen Rangierleitungen an die Rangieranschlüsse 7, 8 gelegt sind, wird der Steckverbinder 400 gezogen, und die neue Verbindung ist hergestellt.

Fig. 9 zeigt eine Trenn-Schaltleiste, die aus Anschlußmoduln gemäß der Ausführungsform nach Fig. 8 aufgebaut ist. Aus jeweils einem Kabelstrang 200, 300 werden Teilnehmer- bzw. Vermittlungsleitungen den entsprechenden Lochführungen 21, 31 zugeführt, über welche die Leitungen an die entsprechenden Anschlußkontakte gelegt werden. Bei den hier dargestellten Trenn-Schaltleisten sind jeweils sechs Anschlußmoduln nebeneinander angeordnet. Als Beispiel einer Verbindung ist wiederum eine Kreuzrangierung dargestellt, die zwischen den gewünschten Moduln der verschiedenen Leisten aufgebaut ist. Es ist erkennbar, daß die Rangiermöglichkeiten in keiner Weise eingeschränkt sind, sondern daß jede Teilnehmerleitung mit jeder Vermittlungsleitung verbunden werden kann.

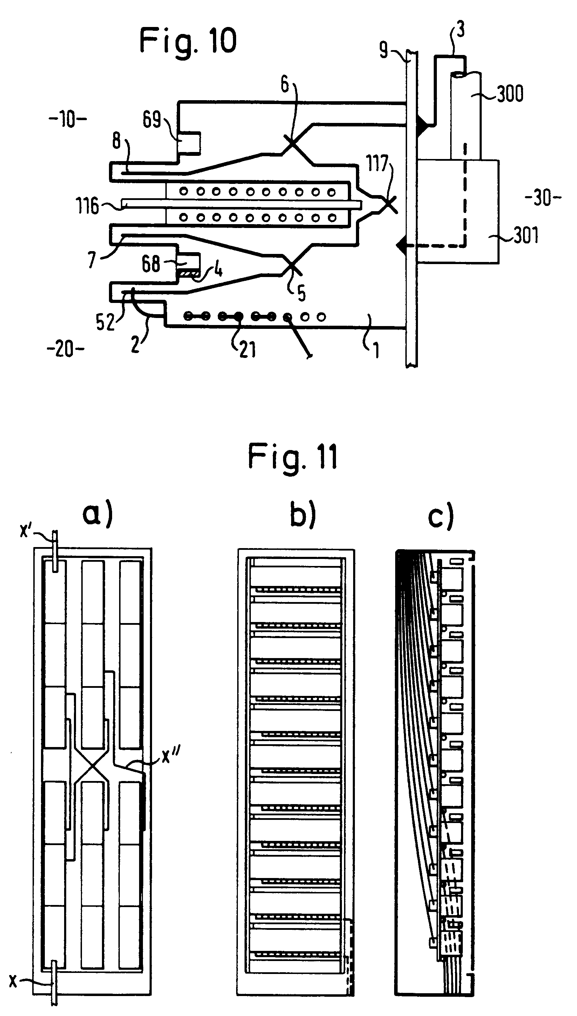

Fig. 10 zeigt eine Ausführungsform des erfindungsgemäßen Anschlußmoduls 1, bei dem die Manipulierseite 10 und die Teilnehmerseite 20 gemeinsam auf einer Zugangsseite vorgesehen sind, während die Vermittlungsseite 30 über die Rückseite des Gestells 9 dem Anschlußmodul 1 zugeordnet ist. Der Anschluß des Kabelstranges 300 erfolgt dabei über einen Stecker 301. Eine Teilnehmerleitung 2 ist über eine Lochführung 21, wie bereits zuvor beschrieben, einer Kontaktstelle 52 zugeführt, die in einen Kontaktarm eines Ruhekontaktes 5 übergeht. Der andere Kontaktarm wird von einer Verlängerung des Rangieranschlusses 7 gebildet. Ein weiterer Rangieranschluß 8 bildet einen Kontaktarm des Ruhekontaktes 6. Dessen anderer Kontakt liegt auf der Vermittlungsseite 30 und ist mit einer Vermittlungsleitung 3 im Kabel 300 verbunden. Die Ruhekontakte 5, 6 sind von der Manipulier- bzw. Teilnehmerseite durch Einstecköffungen 68, 69 zugänglich, wobei unterhalb der Einstecköffnung 68 wiederum die Erdschiene 4 angeordnet ist. Ist eine Sonderrangierung gewünscht, werden die entsprechenden Rangierleitungen zunächst an die Rangieranschlüsse 7, 8 gelegt. Erst dann wird ein Schieber 116 in Richtung auf das Gestell geschoben, so daß hierdurch ein Ruhekontakt 117, welcher zwischen den Ruhekontakten 5, 6 liegt, geöffnet wird. Mit diesem Anschlußmodul ist daher ein unterbrechungsfreies Umschalten möglich. Zudem erfolgen alle Bedienvorgänge von nur einer Seite. Lediglich beim Einbau wird der Stecker 301 von der Vermittlungsseite 30 her aufgesteckt. Dieses hat den unmittelbaren Vorteil, daß vorkonfektionierte Kabel von der Vermittlungseinrichtung zum Verteiler gelegt werden können. Damit wird eine beträchtliche Raumersparnis erreicht.

Fig. 11 zeigt in der Teilabbildung (a) eine schematische Darstellung eines Verteilerschrankes nach der herkömmlichen Bauart, der zur Aufnahme von Kabelanschlüssen für 900 Doppeladern geeignet ist. Die Blöcke x der Eingangsseite und x′ der Ausgangsseite werden durch Schaltdraht x˝ verbunden. Durch das erfindungsgemäße Anschlußmodul ergibt sich eine höhere Packungsdichte, wie in Teilabbildung (b) angedeutet wird. Damit können in einen Schrank mit gleichen Abmessungen eintausendvierhundertacht doppeladrige Kabelanschlüsse aufgenommen werden, was eine Vergrößerung der Kapazität um 56,4% bedeutet. Teilabbildung (c) zeigt eine Seitenansicht des Schrankes aus Abb. (b), aus der besonders deutlich die Zuführung der Vermittlungsleitungen hervorgeht.

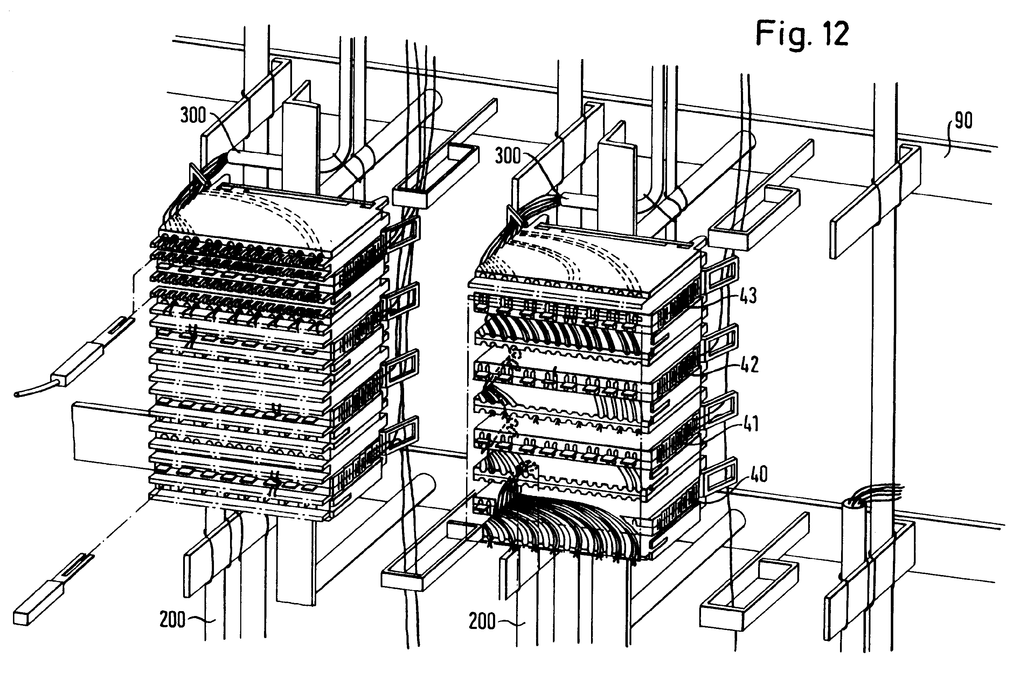

Fig. 12 zeigt grob schematisch die Darstellung eines Verteilers, bei dem eine Anzahl von Trenn-Schaltleisten mit erfindungsgemäßen Anschlußmoduln in Stapeltechnik übereinander an einem Gerüst angeordnet sind. Über Kabelstränge 200, 300 werden die erforderlichen Teilnehmer- bzw. Vermittlungsleitungen an die Leisten herangeführt. Jede der Leisten 40, 41, 42, 43 ist vorzugsweise aus Moduln identischer Ausführungsform aufgebaut, damit der Vorteil der gemeinsamen Erdschiene ausgenutzt werden kann. Nur dann ist es möglich, jede Doppelader einzeln an die Erdschiene zu legen, wenn dies erforderlich erscheint. An den Trenn-Schaltleisten sind Steckverbinder, Trennstecker oder Rangierstecker vorgesehen, die die gewünschten Normalrangierungen bzw. Sonderrangierungen herstellen.

## Patentansprüche

1. Anschlußmodul für eine Verteilereinrichtung, insbesondere für den Hauptverteiler von Fernmeldeeinrichtungen, an dessen Anschlußseiten je eine Teilnehmer- (2) und eine Vermittlungsleitung (3) gelegt ist und an dessen Manipulierseite (10) Rangierleitungen anbringbar sind, wobei das Anschlußmodul wenigstens auf der Anschlußseite mit Einstecköffnungen zum Einstecken von Schaltsteckern versehen ist und im Innern wenigstens eine zwischen den Kontaktelementen angeordnete, die Leitungswege durchschaltende Trennstelle aufweist,
**dadurch gekennzeichnet**,
daß in dem Anschlußmodul (1) zwei Ruhekontakte (5,6) untergebracht sind und daß für eine Normalrangierung eine reversibel verlagerbare Rangiervorrichtung (400, 401, 402, 403) vorgesehen ist.

2. Anschlußmodul nach Anspruch 1, dadurch gekennzeichnet, daß ein Rangierstecker (100, 101, 102, 103) für eine Sonderrangierung vorgesehen ist.

3. Anschlußmodul nach Anspruch 2, dadurch gekennzeichnet, daß der Rangierstecker (100, 101, 102, 103) für die Teilnehmerleitung (2) und für die Vermittlungsleitung (3) je einen Rangieranschluß aufweist.

4. Anschlußmodul nach Anspruch 2 oder 3, dadurch gekennzeichnet, daß in dem Rangierstecker (101) wenigstens eine Trennstelle (140) untergebracht ist.

5. Anschlußmodul nach Anspruch 1, dadurch gekennzeichnet, daß die Normalrangierung mittels eines auf der Manipulierseite (10) angebrachten entfernbaren Steckverbinders (400) als Rangiervorrichtung vorgenommen ist.

6. Anschlußmodul nach Anspruch 1, dadurch gekennzeichnet, daß die Normalrangierung mittels einer öffenbaren Kontaktstelle (401) als Rangiervorrichtung vorgenommen ist.

7. Anschlußmodul nach Anspruch 5 und 6, dadurch gekennzeichnet, daß die Manipulierseite (10) für das Teilnehmerkabel (2) und für das Vermittlungskabel (3) jeweils ein Rangieranschluß (7, 8) für die Sonderrangierung vorgesehen ist.

8. Anschlußmodul nach einem der Ansprüche 1 bis 4, dadurch gekennzeichnet, daß die Normalrangierung mittels einer verschiebbaren Brücke (402, 403) als Rangiervorrichtung vorgenommen ist, wobei dann die Brückenarme (4021, 4022; 4031, 4032) jeweils einen Kontaktarm jeweils eines Ruhekontaktes (5, 6) bilden.

9. Anschlußmodul nach Anspruch 8, dadurch gekennzeichnet, daß eine Feder (404) vorgesehen ist, auf welcher die Brücke (402, 403) so aufliegt, daß die Brückenarme (4021, 4022; 4031, 4032) bei Normalrangierung in Kontakt mit dem Kontaktarm (81, 82) des jeweiligen Ruhekontaktes (5, 6) sind.

10. Anschlußmodul nach Anspruch 8 und 9, dadurch gekennzeichnet, daß der eingeschobene Rangierstecker (103) die Brücke (402, 403) aus ihrer Stellung der Normalrangierung zwingt, wobei an dem Rangierstecker (103) angebrachte Kontaktarme (114, 115) , die mit den Rangieranschlüssen (7, 8) verbunden sind, in Kontakt mit jeweils einem Kontaktarm (81, 82) des jeweiligen Ruhekontaktes (5, 6) sind.

11. Anschlußmodul nach Anspruch 10, dadurch gekennzeichnet, daß der Rangierstecker (103) einen Schaft (108) aufweist, der in der eingeschobenen Stellung die Brücke (403) entgegen der Rückstellkraft der Feder (404) hält.

12. Anschlußmodul nach Anspruch 10 und 11, dadurch gekennzeichnet, daß Stützen (500, 501) vorgesehen sind, an denen die Kontaktarme (104, 105) des eingeschobenen Rangiersteckers anliegen.

13. Anschlußmodul nach einem der Ansprüche 8 bis 11, dadurch gekennzeichnet, daß der Rangierstecker (102, 103) in einer Führung (600, 601) gelagert ist.

14. Anschlußmodul nach Anspruch 12 und 13, dadurch gekennzeichnet, daß die Brückenarme (4021, 4022) eingewinkelt sind und einer der Schenkel (4023, 4024) jedes eingewinkelten Brückenarmes (4021, 4022) entlang der entsprechend angeschrägten Stirnfläche (502, 503) jeder der Stützen (500, 501) bewegbar ist, wobei bei eingeschobenem Rangierstecker (103) die Scheitelstelle (4025, 4026) jedes eingewinkelten Brückenarmes (4021, 4022) an den Schaft (107) zu liegen kommt.

15. Anschlußmodul nach Anspruch 12 oder 13, dadurch gekennzeichnet, daß die Anschlußseite (20, 30) und Manipulierseite (10) auf derselben Zugangsseite des Anschlußmoduls (1) vorgesehen sind.

16. Anschlußmodul nach einem der Ansprüche 1 bis 14, dadurch gekennzeichnet, daß die Anschlußseite in Teilnehmerseite (20) und Vermittlungsseite (30) aufgeteilt ist, wobei die Teilnehmerseite (20) und die Manipulierseite (10) auf derselben Zugangsseite des Anschlußmoduls (1) vorgesehen sind.

17. Trenn-Schaltleiste mit Anschlußmodulen nach einem der Ansprüche 1 bis 16, dadurch gekennzeichnet, daß eine gemeinsame Erdschiene (4) für die Anschlußmodule (1) vorgesehen ist.

## Claims

1. Terminal module for a distributor device, in particular for the main distribution frame of communications equipment, to each terminal side of which subscriber (2) and exchange (3) lines are connected and to the manipulating side (10) of which jumper lines can be connected, wherein the terminal module at least on the terminal side is provided with insertion openings for the insertion of switching plugs, and inside comprises at least one break point which is arranged between the contact elements and puts the routes through, characterised in that two normally closed contacts (5, 6) are accommodated in the terminal module (1), and in that a jumper device (400, 401, 402, 403) which can be located reversibly is provided for normal jumping.

2. Terminal module according to claim 1, characterised in that a jumper plug (100, 101, 102, 103) is provided for special jumping.

3. Terminal module according to claim 2, characterised in that the jumper plug (100, 101, 102, 103) comprises a jumper terminal for each of the subscriber line (2) and exchange line (3).

4. Terminal module according to claim 2 or 3, characterised in that at least one break point (140) is accommodated in the jumper plug (101).

5. Terminal module according to claim 1, characterised in that normal jumping is carried out with a removable connector (400) mounted on the manipulating side (10) as the jumper device.

6. Terminal module according to claim 1, characterised in that normal jumping is carried out with an openable contact point (401) as the jumper device.

7. Terminal module according to claims 5 and 6, characterised in that on the manipulating side (10) for the subscriber cable (2) and for the exchange cable (3) in each case a jumper terminal (7, 8) is provided for special jumping.

8. Terminal module according to any of claims 1 to 4, characterised in that normal jumping is carried out with a slidable bridge (402, 403) as the jumper device, in which case the arms (4021, 4022; 4031, 4032) of the bridge each form a contact arm of a normally closed contact (5, 6).

9. Terminal module according to claim 8, characterised in that a spring (404) is provided, on which the bridge (402, 403) rests in such a way that the arms (4021, 4022; 4031, 4032) of the bridge during normal jumping are in contact with the contact arm (81, 82) of the respective normally closed contact (5, 6).

10. Terminal module according to claims 8 and 9, characterised in that the inserted jumper plug (103) forces the bridge (402, 403) out of its position of normal jumping, wherein contact arms (114, 115) which are mounted on the jumper plug (103) and connected to the jumper terminals (7, 8) are in contact each with a contact arm (81, 82) of the respective normally closed contact (5, 6).

11. Terminal module according to claim 10, characterised in that the jumper plug (103) comprises a shaft (108) which in the inserted position holds the bridge (403) against the return force of the spring (404).

12. Terminal module according to claims 10 and 11, characterised in that posts (500, 501) against which the contact arms (104, 105) of the inserted jumper plug abut are provided.

13. Terminal module according to any of claims 8 to 11, characterised in that the jumper plug (102, 103) is mounted in a guide (600, 601).

14. Terminal module according to claims 12 and 13, characterised in that the bridge arms (4021, 4022) are turned in and one of the legs (4023, 4024) of each inturned bridge arm (4021, 4022) is movable along the correspondingly bevelled end faces (502, 503) of each of the posts (500, 501), wherein when the jumper plug (103) is inserted the apical point (4025, 4026) of each in-turned bridge arm (4021, 4022) comes to lie against the shaft (107).

15. Terminal module according to claim 12 or 13, characterised in that the terminal side (20, 30) and the manipulating side (10) are provided on the same access side of the terminal module (1).

16. Terminal module according to any of claims 1 to 14, characterised in that the terminal side is divided into subscriber side (20) and exchange side (30), wherein the subscriber side (20) and the manipulating side (10) are provided on the same access side of the terminal module (1).

17. Connect/disconnect link with terminal modules according to any of claims 1 to 16, characterised in that a common earthing bar (4) is provided for the terminal modules (1).

## Revendications

1. Module de raccordement pour un dispositif de distribution, en particulier pour le répartiteur principal de dispositifs de télécommunication, sur les côtés raccordement duquel est respectivement montée une ligne d'abonné (2) et une ligne de communication (3), et au côté manipulation (10) duquel peuvent être montées des lignes de connexion, le module de raccordement étant pourvu, au moins du côté raccordement, d'ouvertures d'enfichage destinées à enficher des fiches à communication et présentant à l'intérieur au moins un point de coupure, disposé entre les éléments de contact et assurant l'interconnexion des voies des lignes, caractérisé en ce que dans le module de raccordement (1) sont logés deux contacts de repos (5, 6) et en ce que pour une connexion normale est prévu un dispositif à fiche (400, 402, 403) à possibilité de déplacement réversible.

2. Module de raccordement selon la revendication 1, caractérisé en ce qu'est prévue une prise de connexion (100, 101, 102, 103) destinée à une connexion particulière.

3. Module de raccordement selon la revendication 2, caractérisé en ce que la prise de connexion (100, 101, 102, 103) présente des raccordements de connexion destinés à la ligne d'abonné (2), d'une part, et à la ligne de transmission (3), d'autre part.

4. Module de raccordement selon la revendication 2 ou 3, caractérisé en ce qu'au moins un point de coupure (140) est logé dans la prise de connexion (101).

5. Module de raccordement selon la revendication 1, caractérisé en ce que la connexion normale est effectuée au moyen d'un connecteur à enfichage (400) amovible, monté sur le côté manipulateur (10) et faisant office de dispositif de connexion.

6. Module de raccordement selon la revendication 1, caractérisé en ce que la connexion normale est effectuée au moyen d'un point de contact normal (401) ouvrable, faisant office de dispositif de connexion.

7. Module de raccordement selon les revendications 5 et 6, caractérisé en ce que le côté manipulateur (10) du câble d'abonnés (2) et du câble de transmission (2) est chaque fois prévu d'un raccordement de connexion (7, 8) destiné à une connexion spéciale.

8. Module de raccordement selon l'une des revendications 1 à 4, caractérisé en ce que la connexion normale est effectuée au moyen d'un pont (402, 403) déplaçable, faisant office de dispositif de connexion, les bras de pont (4021, 4022; 4031, 4032) constituant chacun un bras de contact d'un contact de repos (5, 6) respectif.

9. Module de raccordement selon la revendication 8, caractérisé en ce qu'est prévu un ressort (404) sur lequel le pont (402, 403) est posé, de façon que les bras de pont (4021, 4022; 4031, 4032) soient lors de la connexion normale en contact avec le bras de contact (81, 82) du contact de repos (5, 6) respectif.

10. Module de raccordement selon les revendications 8 et 9, caractérisé en ce que l'introduction de la prise de connexion (103) contraint le pont (402, 403) à quitter sa position de branchement normal, des bras de contact (114, 115), montés sur la prise de connexion (103) et reliés au raccordement de connexion (7, 8), étant chacun en contact avec un bras de contact (81, 82) du contact de repos (5, 6) respectif.

11. Module de raccordement selon la revendication 10, caractérisé en ce que la prise de connexion (103) présente une tige (108) maintenant, dans la position insérée, le pont (403) à l'encontre de la force de rappel du ressort (404).

12. Module de raccordement selon les revendications 10 et 11, caractérisé en ce que sont prévus des appuis (500, 501), sur lesquels sur lequel appuient les bras de contact (100, 405) de la prise de connexion introduite.

13. Module de raccordement selon l'une des revendications 8 à 11, caractérisé en ce que la prise de connexion (102, 103) est montée dans un guidage (600, 601).

14. Module de raccordement selon les revendications 12 et 13, caractérisé en ce que les bras de contact (4021, 4022) sont repliés vers l'axe et l'une des branches (4023, 4024) de chaque bras de contact (4021, 4022) replié vers l'axe est déplaçable le long de la face frontale (502, 503), dotée d'un chanfrein correspondant, de chacun des appuis (500, 501), les points sommets (4025, 4026) de chaque bras de contact (4021, 4022) replié vers l'axe venant appuyer sur la tige (107) lorsque la prise de connexion (103) est insérée.

15. Module de raccordement selon la revendication 12 ou 13, caractérisé en ce que le côté raccordement (20, 30) et le côté manipulateur (10) sont prévus sur le même côté d'accès du module de raccordement (1).

16. Module de raccordement selon l'une des revendications 1 à 14, caractérisé en ce que le côté raccordement est subdivisé en un côté abonné (20) et un côté transmission (30), le côté abonné (20) et le côté manipulateur (10) étant prévus sur le même côté d'accès du module de raccordement (1).

17. Barrette de commutation-séparation avec des modules de raccordement selon l'une des revendications 1 à 16, caractérisé en ce qu'est prévu une barre de mise à terre (4) commune pour les modules de raccordement (1).
